# EUROPÄISCHE PATENTANMELDUNG

(11) **EP 3 878 696 A1**
(43) Veröffentlichungstag der Anmeldung: **15.09.2021**
(21) Anmeldenummer: 21166890.0
(22) Anmeldetag: 29.03.2019
(51) Int. Cl.: B60R 13/10

(54) **KRAFTFAHRZEUG MIT EINEM KENNZEICHENHALTER ZUM HALTEN EINES KENNZEICHENSCHILDES AN EINEM KRAFTFAHRZEUG**

(30) Priorität: 26.04.2018 DE 102018110141
(62) Teilanmeldung aus: 19166202.2
(71) Anmelder: L & P Car Design GmbH, 28719 Bremen (DE)
(72) Erfinder: Wikiewicz, Beniamin, 28719 Bremen (DE); Diesendorf, Alexander, 28211 Bremen (DE)
(74) Vertreter: Weidner Stern Jeschke

(57) **Zusammenfassung**

Die Erfindung betrifft einen Kennzeichenhalter (101) zum Halten eines Kennzeichenschildes an einem Kraftfahrzeug, wobei der Kennzeichenhalter eine Halteplatte (103) aufweist, welche einstückig ausgebildet ist und ein erstes Aufnahmemittel (113) zum Halten des Kennzeichenschildes aufweist, wobei die Halteplatte ein zweites Aufnahmemittel (109) aufweist, an welchem ein einstückiger Rahmen (105) befestigbar ist, sodass der einstückige Rahmen die gesamte Halteplatte umgibt. Des Weiteren betrifft die Erfindung ein Kraftfahrzeug mit einem Kennzeichenhalter.

## Beschreibung

Die Erfindung betrifft einen Kennzeichenhalter zum Halten eines Kennzeichenschildes an einem Kraftfahrzeug, wobei der Kennzeichenhalter eine Halteplatte aufweist, welche einstückig ausgebildet ist und ein erstes Aufnahmemittel zum Halten des Kennzeichenschildes aufweist. Des Weiteren betrifft die Erfindung ein Kraftfahrzeug mit einem Kennzeichenhalter.

Neben dem sicheren Halten eines Kennzeichenschildes dient ein Kennzeichenhalter auch zur Vermeidung von ungewollten Geräuschen des Kennzeichenbleches, dem Schutz vor Verlust oder Diebstahl des Kennzeichenschildes sowie dem optischen Design. Des Weiteren tragen die Umrandungen von Kennzeichenhaltern häufig Werbeaufschriften.

Nachteilig bei bekannten Kennzeichenhaltern ist, dass häufig der gesamte Kennzeichenhalter vom Kraftfahrzeug demontiert werden muss, um diesen aus optischen oder werbetechnischen Gründen auszutauschen und somit eine andere Umrandung und/oder Werbeaufschrift an das Kraftfahrzeug anzubringen. Zudem sind die bekannten Kennzeichenhalter häufig mehrteilig aufgebaut und benötigen zum Auswechseln des Kennzeichenhalters und/oder seiner Umrandung und somit der Werbefläche ein Verwenden von Werkzeug.

Die DE 200 13 560 U1 offenbart eine Grundplatte mit einklickbaren Kennzeichen, wobei das Kennzeichen zumindest auf einer Seite unter ein rasthakenähnliches Halteelement geschoben wird und zur Demontage das Halteelement mit einem Werkzeug nach außen bewegt wird.

Die DE 2 047 112 C beschreibt einen dreiteiligen Kennzeichenhalter, bei welchem beidseitig aufsteckbare seitliche Endteile auf ein Mittelteil des Halters zum Arretieren und Anpassen an die Kennzeichenlänge gesteckt werden.

Aus der DE 101 20 139 A1 ist ein Kennzeichenhalter für gebogene Karosserien bekannt, welcher aus zwei separaten Trägerstücken besteht, welche die Länge des Kennzeichenschildes jeweils unterschreiten und flankierende Nute zur Aufnahme des Kennzeichenschildes aufweisen. Dieser Kennzeichenhalter weist eine separate Werbeleiste auf, welche nach Montieren der Trägerstücke über die Endbereiche zweier Trägerstücke geschoben wird und nach Aufbringen des Kennzeichenschildes dadurch gesperrt ist.

Weitere Kennzeichenhalter sind aus der DE 20 2004 019 987 U1, DE 10 120 139 A1, DE 2001 19 487 U1, DE 10 2005 035 232 A1, DE 20 2008 008 701 U1, DE 20 2014 003 576 U1, DE 202 01 00 15 062 U1, DE 202 01 50 07 615 U1 und DE 20 2010 015 062 U1 bekannt.

Aufgabe der Erfindung ist es, den Stand der Technik zu verbessern.

Gelöst wird die Aufgabe durch einen Kennzeichenhalter zum Halten eines Kennzeichenschildes an einem Kraftfahrzeug, wobei der Kennzeichenhalter eine Halteplatte aufweist, welche einstückig ausgebildet ist und ein erstes Aufnahmemittel zum Halten des Kennzeichenschildes aufweist, wobei die Halteplatte eines zweites Aufnahmemittel aufweist, an welchem ein einstückiger Rahmen befestigbar ist, sodass der einstückige Rahmen die gesamte Halteplatte umgibt.

Somit wird ein Kennzeichenhalter aus nur zwei Teilen bereitgestellt, bei dem der einstückige Rahmen die gesamte Halteplatte einrahmt und somit den Kennzeichenhalter außen umläuft. Dadurch ist eine einfache Montage und Demontage des Kennzeichenhalters zum Einsetzen oder Entnehmen des Kennzeichenschildes ermöglicht. Ebenso erlaubt dieser Kennzeichenhalter ein schnelles Auswechseln des Kennzeichens und des Rahmens. Dieser Zeitvorteil realisiert sich insbesondere gegenüber Kennzeichenhalter, bei denen der Rahmen über ein Scharnier oder sonstigen Klappmechanismus mit der Halteplatte "fest" verbunden ist. Das Lösen des Rahmens bei solchen Kennzeichenhalter ist entweder mechanisch kompliziert, bedarf eines Werkzeugs oder führt zur Zerstörung der Halteplatte oder des Rahmens. Die erfindungsgemäße Lösung ist im Gegensatz dazu diesbezüglich einfach, schnell und frei von mechanischen Klappmechanismen oder Scharnieren. Ein Rahmen kann schnell entfernt oder neu aufgebracht werden. Zudem ist beim Austausch nicht immer ein neuer Kennzeichenhalter komplett auszutauschen, sondern es kann lediglich ein Austausch des Rahmens, welcher beispielsweise eine andere Farbe oder ein anderes Werbelogo aufweist, erfolgen. Dies spart Kosten für Material und Zeit bei der Montage.

Es ist besonders vorteilhaft, dass der einstückige umlaufende Rahmen individualisiert mit einer Werbeaufschrift oder einer bestimmten Farbe ausgerüstet werden kann. Da der Rahmen von außen auf der Halteplatte befestigt wird, kann der Rahmen separat ausgetauscht werden. Dies ist beispielsweise vorteilhaft für einen Autovermieter, welcher nach einer gewissen Vermietungszeit das Auto verkauft und dazu den Rahmen mit seinem Firmenlogo gegen einen neutralen Rahmen in der Farbe des Autos austauscht.

Dadurch, dass der einstückige Rahmen die Halteplatte mit dem eingesetzten Kennzeichenschild umgibt und somit den Kennzeichenhalter am Rande nach außen umlaufend abschließt, wird eine ungewollte Entnahme des Kennzeichenschildes erschwert, da es für einen Dieb nicht direkt ersichtlich ist, dass der umlaufende einstückige Rahmen abnehmbar ist.

Ein wesentlicher Gedanke der Erfindung beruht darauf, dass durch Befestigen eines einstückigen umlaufenden Rahmens um die gesamte, einstückige Halteplatte der Rahmen schnell und leicht auswechselbar ist und auch später separat von der am Fahrzeug montierten Halteplatte getauscht werden kann, sodass der Rahmen ein frei wählbares Werbelogo oder ein fahrzeugintegrierendes Design aufweist.

Folgendes Begriffliche sei erläutert:

Ein "Kennzeichenhalter" (auch "Kennzeichenträger" genannt) ist insbesondere ein Halter zum Anbringen eines Kennzeichenschildes an ein Kraftahrzeug. Der Kennzeichenhalter nimmt das Kennzeichenschild insbesondere ohne ein zusätzliches Verbindungselement auf und hält dieses fest, sodass durch Vibrationen beim Fahren keine ungewollten Geräusche des Kennzeichenschildes entstehen. Der Kennzeichenhalter weist insbesondere eine einstückige Halteplatte und einen befestigbaren einstückigen umlaufenden Rahmen auf. Die Halteplatte ist üblicherweise mit Blechschrauben an dem Karosserieblech des Kraftfahrzeuges befestigt. Der umlaufende Rahmen ist insbesondere farblich und/oder durch Werbeaufschrift individualisierbar. Der Kennzeichenhalter besteht insbesondere aus Kunststoff, wie beispielsweise Polypropylen (PP) und/oder Acrylnitril-Butadien-StyrolCopolymere (ABS).

Ein "Kennzeichenschild" (auch "Kraftfahrzeugkennzeichen" oder "Kennzeichen" genannt) ist insbesondere ein Schild mit einer von der zuständigen Straßenverkehrsbehörde zugeteilten individuellen numerischen und/oder alphanumerischen Registrierbezeichnung für ein Kraftfahrzeug. Ein Kennzeichenschild dient insbesondere zur Identifizierung des Fahrzeughalters. Ein Kennzeichenschild unterliegt der jeweiligen nationalen Normung in Farbgebung und Tafelgröße.

Eine "Halteplatte" ist insbesondere eine Grundplatte des Kennzeichenhalters, welche an die Karosserie des Kraftahrzeuges montiert wird und sowohl das Kennzeichenschild als auch den umlaufenden Rahmen aufnimmt.

Ein "erstes Aufnahmemittel" dient insbesondere zum Halten des Kennzeichenschildes. Die Halteplatte weist insbesondere das erste Aufnahmemittel auf, wobei es sich hierbei insbesondere um eine separat an der Halteplatte angeordnete Aufnahme oder um eine in der Halteplatte integrierte Aufnahme für das Kennzeichenschild handelt. Bei einem in der Halteplatte integrierten ersten Aufnahmemittel handelt es sich beispielsweise um eine Kerbe in der Halteplatte, in welcher das Kennzeichenschild eingesteckt wird.

Ein "zweites Aufnahmemittel" ist insbesondere eine Aufnahme und/oder ein Verbindungsmittel, welches dazu dient, den einstückigen Rahmen umlaufend auf der Halteplatte zu befestigen. Das zweite Aufnahmemittel ist insbesondere ebenfalls separat an der Halteplatte ausgeführt oder in der Halteplatte integriert.

Bei einem "Rahmen" handelt es sich insbesondere um einen umlaufenden Rand um die Halteplatte und somit des Kennzeichenhalters, welcher diese seitlich und/oder auf der Seite, auf welcher auf das Kennzeichenschild draufgeschaut wird, umgibt. Der Rahmen dient insbesondere zur Einfassung und/oder Stabilisierung des Kennzeichenschildes und der Halteplatte. Der Rahmen verhindert insbesondere, dass Wasser und/oder Schmutz zwischen der Halteplatte und dem Kennzeichenschild eindringt. Der Rahmen wird insbesondere von außen, das bedeutet auf der Seite des sichtbaren Kennzeichenschildes, auf die Halteplatte aufgesetzt. Der Rahmen bildet insbesondere die äußere Begrenzung des Kennzeichenhalters. Der Rahmen ist insbesondere einstückig ausgelegt und ist farblich und gestalterisch frei individualisierbar. Hierbei kann der Rahmen auch unterschiedliche Rahmenbreiten und/oder -formen aufweisen.

Unter "einstückig" (auch "einteilig") wird insbesondere verstanden, dass der Rahmen oder die Halteplatte jeweils aus genau einem Teil besteht.

In einer weiteren Ausführungsform weist der Kennzeichenhalter den einstückigen Rahmen auf.

Somit verhindert der befestigte einstückige Rahmen, dass Wasser und/oder Schmutz zwischen das Kennzeichenschild und die Halteplatte gelangen.

Es ist besonders vorteilhaft, dass durch den befestigten einstückigen Rahmen an der Halteplatte der Kennzeichenhalter farblich und/oder werbetechnisch individualisiert ist.

Um ein einfaches Montieren, Demontieren und somit Austauschen des Rahmens zu gewährleisten, weist der einstückige Rahmen ein zum zweiten Aufnahmemittel entgegengesetzt ausgebildetes Verbindungsmittel auf, wobei der einstückige Rahmen mittels des Verbindungsmittels und des zweiten Aufnahmemittels formschlüssig und frei von einem zusätzlichen Verbindungselement an der Halteplatte befestigt ist, sodass der einstückige Rahmen ohne Verwenden eines Werkzeuges von der Halteplatte wieder lösbar ist.

Somit ist der einstückige Rahmen von außen auf die Halteplatte einfach und schnell aufsetzbar, beispielsweise durch Einklicken, Klemmen und/oder Einrasten.

Es ist besonders vorteilhaft, dass die Verbindung zwischen dem einstückigen Rahmen und der Halteplatte direkt formschlüssig durch Aneinanderbringen beider Teile erfolgt, ohne dass dazu ein zusätzliches Verbindungselement, wie beispielsweise eine Schraube, zur Befestigung notwendig ist. Folglich kann der Rahmen durch Abziehen von der Haltplatte in sehr einfacher und schneller Weise wieder gelöst werden.

In Abhängigkeit der länderspezifischen Zuordnung des Kennzeichens zum Fahrzeug oder zum Halter kann somit ein sehr schnelles Auswechseln des Kennzeichens bei einem Fahrzeug- oder Halterwechsel erfolgen.

Somit wird durch die formschlüssige Verbindung des einstückigen Rahmens an der Halteplatte zum einem eine feste Verbindung hergestellt, welche gewährleistet, dass die beiden Teile des Kennzeichenhalters auch bei starken Beanspruchungen und Vibrationen während einer Fahrt des Kraftfahrzeuges verbunden bleiben, und zum anderen jedoch diese Verbindung auch ohne Einsatz eines Werkzeuges lösbar ist, sodass der Rahmen einfach und schnell entfernt werden kann, um diesen gegen einen anderen Rahmen und/oder das Kennzeichen auszutauschen.

Ein "Verbindungsmittel" stellt insbesondere einen Verbindungspartner dar, welcher entgegengesetzt zum zweiten Aufnahmemittel ausgebildet ist und mit diesem zweiten Aufnahmemittel ineinander greift. Beispielsweise ist das zweite Aufnahmemittel eine Nut, in welche das als Feder ausgebildete Verbindungsmittel eingreift. Hierbei kann das zweite Aufnahmemittel umlaufend am Rand der Halteplatte und entsprechend das Verbindungsmittel entgegengesetzt ausgebildet, umlaufend am Rahmen ausgeführt sein. Ebenso kann das zweite Aufnahmemittel nur punktuell an bestimmten Stellen der Halteplatte und das Verbindungsmittel entsprechend ebenfalls punktuell am einstückigen Rahmen ausgeführt sein. Im letzteren Fall kann es sich beispielsweise bei dem Verbindungsmittel um mehrere Haltenasen handeln, welche in entsprechend ausgeführte Löcher des Halterahmens als zweites Aufnahmemittel der Halteplatte einrasten.

Unter "formschlüssig" wird insbesondere verstanden, dass die beiden Verbindungspartner - das Verbindungsmittel des einstückigen Rahmens und das zweite Aufnahmemittel der Halteplatte - ineinander greifen. Bei der formschlüssigen Verbindung ist entweder das zweite Aufnahmemittel der Halteplatte oder das Verbindungsmittel des einstückigen Rahmens dem entsprechend anderen Verbindungspartner im Weg, sodass eine Sperrung in mindestens einer Richtung vorliegt.

"Frei von einem zusätzlichen Verbindungselement" bedeutet insbesondere, dass für die formschlüssige Verbindung zwischen dem einstückigen Rahmen und der Halteplatte kein weiteres Verbindungselement, wie beispielsweise eine Niete oder Schraube, notwendig ist. Folglich ist ebenfalls eine Verwendung eines Werkzeuges zur Montage des einstückigen Rahmens an der Halteplatte oder entsprechend zur Demontage nicht erforderlich.

In einer weiteren Ausführungsform des Kennzeichenhalters ist das zweite Aufnahmemittel oder das entgegengehsetzt ausgebildete Verbindungsmittel als eine Nut, eine Einkerbung oder eine Aussparung der Halteplatte oder des einstückigen Rahmens ausgebildet.

Dadurch ist es besonders vorteilhaft, dass das zweite Aufnahmemittel oder das entgegengesetzt ausgebildete Verbindungsmittel direkt in der Halteplatte oder den einstückigen Rahmen integriert ist und somit aus demselben Material wie die Halteplatte oder der einstückige Rahmen besteht. Folglich ist oder sind die Halteplatte und/oder der Rahmen aus einem Material und einem Stück gefertigt.

Folglich wird in einfacher Weise eine Klick-, Klemm- und/oder Rastverbindung hergestellt.

Eine "Nut" ist insbesondere eine Vertiefung in einem Material der Halteplatte oder des Rahmens. Eine Nut weist insbesondere die Form einer schmalen Rinne auf. Die Nut kann insbesondere als längliche umlaufende Vertiefung in der Halteplatte oder dem Rahmen oder jeweils entsprechend nur abschnittsweise in der Halteplatte oder dem Rahmen ausgeführt sein.

Unter einer "Einkerbung" wird insbesondere ein spitz zulaufender und/oder keilförmiger Einschnitt in der Halteplatte oder dem Rahmen verstanden.

Eine "Aussparung" ist insbesondre ein freier Raum in der Halteplatte oder dem Rahmen, welcher zur Herstellung der formschlüssigen Verbindung freigehalten ist. Bei einer Aussparung kann es sich beispielsweise um eine Lücke, ein Loch und/oder eine Vertiefung handeln.

Um eine sichere und geräuscharme Aufnahme des Kennzeichenschildes im Kennzeichenhalter zu gewährleisten, weist das erste Aufnahmemittel zum Halten des Kennzeichenschildes eine Führungsschiene auf.

Somit kann zur Montage des Kennzeichenschildes das Kennzeichenschild in einfacher Weise in die Führungsschiene der Halteplatte eingeschoben und/oder eingesteckt werden und wird durch diese sicher gehalten.

Eine "Führungsschiene" ist insbesondere eine Linearführung, in welcher das Kennzeichenschild einschiebbar und/oder einsetzbar ist. Das Kennzeichenschild wird insbesondere in der Mitte der Führungsschiene eingesetzt und durch deren beiden Seitenwände stabilisiert. Die Führungsschiene ist insbesondere direkt in der Halteplatte integriert. Bevorzugt ist die Führungsschiene direkt aus der Halteplatte, das bedeutet aus demselben Material, geformt, sodass die Halteplatte mit der Führungsschiene einstückig ausgeführt ist.

In einer weiteren Ausführungsform des Kennzeichenhalters fixiert der einstückige Rahmen zusätzlich zum ersten Aufnahmemittel das Kennzeichenschild in der Halteplatte.

Hierzu kann der einstückige Rahmen das Kennzeichenschild beispielsweise zusätzlich abstützen, einklemmen oder andersartig fixieren.

Um eine individuelle Gestaltung des Rahmens sowie eine freie Farb- und/oder Formauswahl zu ermöglichen, weist der einstückige Rahmen Kunststoff und/oder ein Metall auf.

Somit kann ein fahrzeugintegrierendes Design und/oder eine dekorative Oberfläche des Rahmens sowie eine freie Gestaltung des Rahmens zu Werbezwecken erzielt werden.

Als "Kunststoff" wird ein Werkstoff verstanden, welcher hauptsächlich aus Makromolekülen besteht. Beispielsweise weist der einstückige Rahmen als Kunststoff Polypropylen (PP), Polystyrol (PS) und/oder AcrylnitrilButadien-Styrol-Copolymere (ABS) auf.

Unter "Metall" wird ein Element verstanden, welches in dem Periodensystem zu den Halbmetallen und Metallen gehört. Unter Metall wird insbesondere auch eine entsprechende Legierung verstanden. Bei einem Metall handelt es sich beispielsweise um Edelstahl.

Um den Kennzeichenhalter an die länderspezifische Größe anzupassen, weist die Halteplatte eine entsprechende Tiefe, Höhe und/oder Breite auf.

In einer weiteren Ausführungsform des Kennzeichenhalters weist die Halteplatte eine Tiefe in einem Bereich von 3 mm bis 20 mm, bevorzugt von 4 mm bis 15 mm, auf.

Damit der Kennzeichenhalter die erforderliche Höhe aufweist, weist die Halteplatte eine Höhe in einem Bereich von 80 mm bis 200 mm, bevorzugt von 105 mm bis 125 mm, auf.

In einer weiteren Ausführungsform des Kennzeichenhalters weist die Halteplatte eine Breite in einem Bereich von 180 mm bis 600 mm, bevorzugt von 320 mm bis 540 mm, auf.

In einem weiteren Aspekt der Erfindung wird die Aufgabe gelöst durch ein Kraftfahrzeug, wobei das Kraftfahrzeug einen zuvor beschriebenen Kennzeichenhalter aufweist.

Somit ist die dekorative Gestaltung des Rahmens an das jeweilige Kraftfahrzeug anpassbar und der Rahmen ist nach den Wünschen des Kraftfahrzeughalters auswechselbar. Insbesondere kann bei einem Fahrzeug- und/oder Halterwechsel der Rahmen entsprechend des neuen Fahrzeuges und/oder des Wunsches des neuen Halters ausgetauscht und somit sein Design verändert werden. Beispielsweise kann bei Nutzung eines Firmenfahrzeuges der Mutterfirma durch einen Mitarbeiter der Tochterfirma in einfacher Weise der Rahmen mit dem Logo der Mutterfirma abgeklickt werden und schnell stattdessen der Rahmen mit dem Logo der Tochterfirma angeklickt werden. Somit kann das Firmenfahrzeug individuell sowohl von Mitarbeitern der Mutterfirma als auch von Mitarbeitern der Tochterfirma genutzt werden, ohne dass die Tochterfirma eigene Fahrzeuge anschaffen oder betreiben muss.

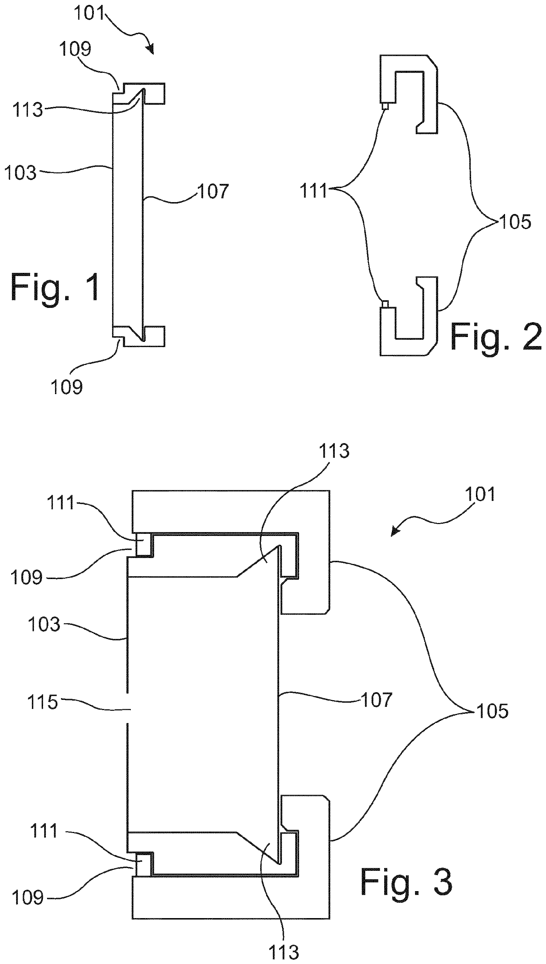

Im Weiteren wird die Erfindung anhand von Ausführungsbeispielen näher erläutert. Es zeigen
- Figur 1: eine stark schematische Schnittdarstellung einer Seitenansicht eines Kennzeichenhalters mit einer Grundplatte und einem eingesetzten Kennzeichenschild,
- Figur 2: eine stark schematische Schnittdarstellung einer Seitenansicht eines Außenrahmens eines Kennzeichenhalters, und
- Figur 3: einen Kennzeichenhalter mit Grundplatte, eingesetztem Kennzeichenschild und aufgesetztem Außenrahmen.

Ein Kennzeichenhalter 101 weist eine einstückige Grundplatte 103 auf. Die einstückige Grundplatte 103 ist aus ABS gefertigt und bei der Fertigung der einstückigen Grundplatte 103 ist innenliegend umlaufend direkt eine Führungsschiene 113 sowie außen umlaufend eine Nut 109 gefertigt worden. In der Führungsschiene 113 ist ein Kennzeichenschild 107 eingesetzt.

Ein einstückiger Außenrahmen 105 aus ABS ist derart gefertigt, dass dieser seitlich die Grundplatte 103 umgreift. Der einstückige Außenrahmen 105 weist umlaufend eine Feder 111 auf, welche im befestigten Zustand in die Nut 109 der Grundplatte 103 eingreift, sodass die umlaufende Feder 111 des Außenrahmens 105 und die umlaufende Nut 109 der Grundplatte 103 eine formschlüssige Verbindung herstellen.

Zur Montage des Kennzeichenhalters 101 wird die Grundplatte 103 an ein Karosserieblech eines nicht gezeigten Kraftfahrzeuges geschraubt, indem eine nicht gezeigte Blechschraube durch das Befestigungsloch 115 der Grundplatte 103 in das Karosserieblech mittels eines Schraubenziehers geschraubt wird. Anschließend wird das Kennzeichenschild 107 in die Führungsschiene 113 der Grundplatte 103 eingesetzt und durch die Führungsschiene 113 gehalten. Der Außenrahmen 105 wird außen seitlich auf die Grundplatte 103 aufgesetzt und eingeklickt, wobei die Feder 111 des Außenrahmens 105 in die Nut 109 der Grundplatte 103 eingreift. Gleichzeitig wird das Kennzeichenschild 107 durch den Außenrahmen 105 zusätzlich gehalten.

Das nicht gezeigte Kraftfahrzeug wird ein Jahr lang als Mietwagen einer Autovermietung betrieben, wobei auf den Außenrahmen 105 das Logo des Autovermieters aufgedruckt ist. Anschließend möchte der Autovermieter das Kraftfahrzeug verkaufen und klickt deshalb den Außenrahmen 105 mit seinem Logo von der Grundplatte 103 ab und setzt einen anderen Außenrahmen 105 in der Farbe des Kraftfahrzeuges stattdessen auf die Grundplatte 103 auf, sodass der Kennzeichenhalter 101 ein neutrales Design in der Farbe des Kraftfahrzeuges für den Verkauf aufweist. Somit ist der Außenrahmen 105 austauschbar, ohne dass eine Demontage der Grundplatte 103 von der Fahrzeugkarosserie erfolgen muss.

### Bezugszeichenliste

- 101: Kennzeichenhalter
- 103: Grundplatte
- 105: Außenrahmen
- 107: Kennzeichenschild
- 109: Nut
- 111: Feder
- 113: Führungsschiene
- 115: Befestigungsloch

## Patentansprüche

1. Kennzeichenhalter (101) zum Halten eines Kennzeichenschildes (107) an einem Kraftfahrzeug, wobei der Kennzeichenhalter eine Halteplatte (103) aufweist, welche einstückig ausgebildet ist und ein erstes Aufnahmemittel (113) zum Halten des Kennzeichenschildes aufweist, **dadurch gekennzeichnet, dass** die Halteplatte ein zweites Aufnahmemittel (109) aufweist, an welchem ein einstückiger Rahmen (105) befestigbar ist, sodass der einstückige Rahmen die gesamte Halteplatte umgibt.

2. Kennzeichenhalter nach Anspruch 1, **dadurch gekennzeichnet, dass** der Kennzeichenhalter den einstückigen Rahmen aufweist.

3. Kennzeichenhalter nach Anspruch 2, **dadurch gekennzeichnet, dass** der einstückige Rahmen ein zum zweiten Aufnahmemittels (109) entgegengesetzt ausgebildetes Verbindungsmittel (111) aufweist, wobei der einstückige Rahmen mittels des Verbindungsmittels und des zweiten Aufnahmemittels formschlüssig und frei von einem zusätzlichen Verbindungselement an der Halteplatte befestigt ist, sodass der einstückige Rahmen ohne Verwenden eines Werkzeuges von der Halteplatte wieder lösbar ist.

4. Kennzeichenhalter nach einem der vorherigen Ansprüche, **dadurch gekennzeichnet, dass** das zweite Aufnahmemittel oder das entgegengesetzt ausgebildete Verbindungsmittel als eine Nut (109), eine Einkerbung und/oder eine Aussparung der Halteplatte oder des einstückigen Rahmens ausgebildet ist.

5. Kennzeichenhalter nach einem der vorherigen Ansprüche, **dadurch gekennzeichnet, dass** das erste Aufnahmemittel zum Halten des Kennzeichenschildes eine Führungsschiene (113) aufweist.

6. Kennzeichenhalter nach einem der vorherigen Ansprüche, **dadurch gekennzeichnet, dass** der einstückige Rahmen zusätzlich zum ersten Aufnahmemittel das Kennzeichenschild in der Halteplatte fixiert.

7. Kennzeichenhalter nach einem der vorherigen Ansprüche, **dadurch gekennzeichnet, dass** der einstückige Rahmen Kunststoff und/oder ein Metall aufweist.

8. Kennzeichenhalter nach einem der vorherigen Ansprüche, **dadurch gekennzeichnet, dass** die Halteplatte eine Tiefe in einem Bereich von 3 mm bis 20 mm, bevorzugt von 4 mm bis 15 mm, aufweist.

9. Kennzeichenhalter nach einem der vorherigen Ansprüche, **dadurch gekennzeichnet, dass** die Halteplatte eine Höhe in einem Bereich von 80 mm bis 200 mm, bevorzugt von 105 mm bis 125 mm, aufweist.

10. Kennzeichenhalter nach einem der vorherigen Ansprüche, **dadurch gekennzeichnet, dass** die Halteplatte eine Breite in einem Bereich von 180 mm bis 600 mm, bevorzugt von 320 mm bis 540 mm, aufweist.

## Geänderte Patentansprüche

### Geänderte Patentansprüche gemäss Regel 137(2) EPÜ.

1. Kennzeichenhalter (101) zum Halten eines Kennzeichenschildes (107) an einem Kraftfahrzeug, wobei der Kennzeichenhalter eine Halteplatte (103) aufweist, welche einstückig ausgebildet ist und ein erstes Aufnahmemittel (113) zum Halten des Kennzeichenschildes aufweist, **dadurch gekennzeichnet, dass** der Kennzeichenhalter einen einstückigen Rahmen aufweist und die Halteplatte ein zweites Aufnahmemittel (109) aufweist, an welchem der einstückiger Rahmen (105) auswechselbar befestigbar ist, sodass der einstückige Rahmen die gesamte Halteplatte umgibt und der einstückige Rahmen ein zum zweiten Aufnahmemittel (109) entgegengesetzt ausgebildetes Verbindungsmittel (111) aufweist, wobei der einstückige Rahmen mittels des Verbindungsmittels und des zweiten Aufnahmemittels formschlüssig und frei von einem zusätzlichen Verbindungselement an der Halteplatte befestigt ist, sodass der einstückige Rahmen ohne Verwenden eines Werkzeuges von der Halteplatte wieder lösbar ist.

2. Kennzeichenhalter nach Anspruch 1, **dadurch gekennzeichnet, dass** das zweite Aufnahmemittel oder das entgegengesetzt ausgebildete Verbindungsmittel als eine Nut (109), eine Einkerbung und/oder eine Aussparung der Halteplatte oder des einstückigen Rahmens ausgebildet ist.

3. Kennzeichenhalter nach Anspruch 1 oder 2, **dadurch gekennzeichnet, dass** das erste Aufnahmemittel zum Halten des Kennzeichenschildes eine Führungsschiene (113) aufweist.

4. Kennzeichenhalter nach einem der vorherigen Ansprüche, **dadurch gekennzeichnet, dass** der einstückige Rahmen zusätzlich zum ersten Aufnahmemittel das Kennzeichenschild in der Halteplatte fixiert.

5. Kennzeichenhalter nach einem der vorherigen Ansprüche, **dadurch gekennzeichnet, dass** der einstückige Rahmen Kunststoff und/oder ein Metall aufweist.

6. Kennzeichenhalter nach einem der vorherigen Ansprüche, **dadurch gekennzeichnet, dass** die Halteplatte eine Tiefe in einem Bereich von 3 mm bis 20 mm, bevorzugt von 4 mm bis 15 mm, aufweist.

7. Kennzeichenhalter nach einem der vorherigen Ansprüche, **dadurch gekennzeichnet, dass** die Halteplatte eine Höhe in einem Bereich von 80 mm bis 200 mm, bevorzugt von 105 mm bis 125 mm, aufweist.

8. Kennzeichenhalter nach einem der vorherigen Ansprüche, **dadurch gekennzeichnet, dass** die Halteplatte eine Breite in einem Bereich von 180 mm bis 600 mm, bevorzugt von 320 mm bis 540 mm, aufweist.
